(19) Europäisches Patentamt

European Patent Office

Office européen des brevets

(11) **EP 0 728 787 B1**

(12) **FASCICULE DE BREVET EUROPEEN**

(45) Date de publication et mention
de la délivrance du brevet:
**20.11.2002 Bulletin 2002/47**

(51) Int Cl.[7]: **C08G 18/72**, C08G 18/08,
C08G 18/80, C09D 175/04

(21) Numéro de dépôt: **96400322.2**

(22) Date de dépôt: **16.02.1996**

(54) **Composition utile pour la peinture à base de mélange d'émulsion(s) et dispersion(s) de polymère polyol et revêtement(s) qui en sont issus**

Zusammensetzung für Lacke auf Basis von Emulsionen und Dispersionen von Polymerpolyolen, sowie daraus hergestellte Beschichtungen

Composition useful for lacquers based on mixtures of emulsions and dispersions of polymer polyols and coatings prepared therefrom

(84) Etats contractants désignés:
**AT BE CH DE DK ES FR GB GR IE IT LI LU MC NL PT SE**

(30) Priorité: **21.02.1995 FR 9502000**

(43) Date de publication de la demande:
**28.08.1996 Bulletin 1996/35**

(73) Titulaire: **RHODIA CHIMIE**
**92408 Courbevoie Cédex (FR)**

(72) Inventeurs:
• **Langlois, Bruno**
**F-91700 Saint-Geneviève-des-Bois (FR)**

• **Ponce, Arnauld**
**F-93300 Aubervilliers (FR)**
• **Guérin, Gilles**
**F-95600 Eaubonne (FR)**

(74) Mandataire: **Ricalens, François et al**
**Rhodia Services,**
**Direction de la Propriété Industrielle,**
**40, rue de la Haie-Coq**
**93306 Aubervilliers Cedex (FR)**

(56) Documents cités:
**EP-A- 0 358 979**    **EP-A- 0 557 844**
**WO-A-94/22935**

Printed by Jouve, 75001 PARIS (FR)

## Description

La présente invention concerne des mélanges d'émulsions avec des dispersions de polymère. Elle concerne plus particulièrement la stabilité d'une dispersion de polyol conjointement avec une émulsion d'isocyanate, le plus souvent masqué.

De telles compositions sont notamment utiles pour les vernis et la peinture, mais elles peuvent être utiles pour toute application utilisant les propriétés de condensation des isocyanates. Elles peuvent également être utiles dans tout domaine dans lequel on a à faire coexister des émulsions d'isocyanates, en général bloqués, avec des dispersions d'alcools insolubles de granulométrie différente et notamment dans les formulations pour l'agriculture.

Dans la suite de la présente description, on utilisera le terme de dispersion pour les polymères à fonctions hydroxyles et notamment les polyols cependant qu'on utilisera l'expression émulsions pour les isocyanates, bloqués ou non.

L'utilisation de solvants organiques est de plus en plus souvent critiquée par les autorités en charge de la sécurité du travail, car ces solvants, ou du moins certains d'entre eux, sont réputés toxiques ou chronotoxiques. C'est la raison pour laquelle on essaye de développer de plus en plus des techniques qui se substituent aux techniques en milieu solvant pour pallier les inconvénients afférents aux solvants.

Une des solutions les plus souvent utilisées réside dans l'utilisation d'émulsions ou de dispersions dans l'eau.

Pour réaliser des films de peintures ou de vernis, on mélange deux dispersions, une émulsion contenant l'isocyanate qui peut être bloqué et une dispersion de polyol.

Le mélange des dispersions pouvant également contenir des pigments et des charges est alors déposé sur un support sous forme d'un film à l'aide des techniques classiques de mise en oeuvre des peintures industrielles. Lorsque la préparation contient des isocyanates bloqués, l'ensemble film plus support est cuit à une température suffisante pour assurer le déblocage des fonctions isocyanates et la condensation de celles-ci avec des groupements hydroxyles des particules de polyol.

Dans la présente description, les caractéristiques de granulométrie font souvent référence à des notations du type $d_n$ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n % (en poids, ou plus exactement en masse, puisque le poids n'est pas une quantité de matière mais une force) des particules soit inférieur ou égal à ladite taille.

Dans la suite de la description, on utilisera l'indice de polydispersité, lequel est défini comme

$$I = (d_{90} - d_{10})/d_{50}$$

Typiquement, les rapports des tailles moyennes ($d_{50}$) entre l'émulsion d'isocyanate et la dispersion de polyol sont compris entre 2 et 200. Ainsi les tailles moyennes des émulsions d'isocyanates fabriquées selon la technique décrite dans la demande de brevet français déposée le 31.03.1993 sous le n° 93 03795 et publiée sous le n° 2703358 le 07.10.94, ont des tailles moyennes comprises entre 0,1 et 10 micromètres et plus généralement entre 0,3 et 2 micromètres. Les dispersions de polyols utilisées en association avec ces émulsions ont des tailles moyennes mesurées par diffusion quasi élastique de la lumière comprises entre 20 et 200 nanomètres et plus généralement comprises entre 50 et 150 nanomètres.

Lorsque l'on mélange des dispersions de tailles différentes, ce qui est généralement le cas, de manière à obtenir des rapports molaires entre les groupements NCO et OH compris entre 0,3 à 10 et plus préférentiellement entre 0,8 et 1,5, on observe une instabilité des mélanges des deux dispersions.

A titre d'exemple, cette instabilité se traduit par une séparation macroscopique rapide, en quelques minutes généralement, pour donner d'une part une phase fluide et d'autre part une phase très visqueuse.

Il s'ensuit non seulement une impossibilité à conserver (stocker) ces mélanges, mais aussi une difficulté extrême à appliquer ce mélange sur la surface que l'on désire recouvrir selon les techniques usuelles d'application des peintures et des vernis. Si on fait en sorte d'appliquer ces mélanges instables sur un support, tel que sur une plaque de verre ou métallique, le film résultant n'est pas transparent mais apparaît opaque et hétérogène et donc ne convient pas.

Pour résoudre ce problème, la demande européenne publiée sous le n° 0 358 979 propose d'utiliser un polyol dans lequel on émulsifie l'isocyanate ; la demande postérieure du même déposant n° 0 557 844 propose une solution similaire en utilisant, le cas échéant, des épaississants.

Ces problèmes sont particulièrement aigus dans le cas d'isocyanates, masqués ou non, lorsqu'ils sont mélangés à des polyols non solubles, dispersés dans l'eau.

Ainsi, un des buts de la présente invention est de fournir une technique qui permette de fournir des mélanges fluides et stables d'une émulsion isocyanates avec des dispersions de polyols qui soient stables "per se", notamment sans qu'il y ait lieu d'ajouter d'additif supplémentaire ou de neutralisant par exemple pour ajuster un pH.

Un autre but de la présente invention est de fournir des compositions comportant une émulsion d'isocyanates masqués et une dispersion de polyols qui soient physiquement stables pendant un mois au moins.

L'autre but de l'invention est d'obtenir, à partir de ces mélanges stables et fluides de cette émulsion avec une dispersion de polyol, des films présentant de bonnes propriétés de brillance, transparence et résistance aux solvants.

Ces buts sont atteints au moyen d'une composition comportant :

- - au moins un polyisocyanate masqué ou non sous la forme d'une émulsion aqueuse dont la taille moyenne est comprise entre 0,1 et 10 micromètres et de préférence inférieure à 2 et supérieure à 0,2 micromètre.

- - au moins un polymère polyhydroxylé, avantageusement un polyol, sous forme d'une dispersion aqueuse dont la taille moyenne est comprise entre 10 et 200 nanomètres. La quantité en polymère(s) polyhydroxylé(s) du mélange étant choisie de manière à répondre à l'une des deux contraintes suivantes :

   □ la teneur en polymère(s) polyhydroxylé(s) exprimée en pour cent massique est au moins égale à 35 - 0,75 R, avantageusement au moins égale à 40 - 0,75 R, de préférence à 45 - 0,75 R ;
   □ la teneur en polymère(s) polyhydroxylé(s) exprimée en pour cent massique est au plus égale à 45 - 2 R, avantageusement au plus égale à 40 - 2 R, de préférence à 35 - 2 R ;

   avec R égal au rapport entre la taille moyenne ($d_{50}$) de l'émulsion et celle de la dispersion de polymère polyhydroxylé, avantageusement de polyol, et avec la condition que R soit au moins égal à 2.

Le rapport (R) entre les tailles moyennes des particules élémentaires ($d_{50}$) de l'émulsion et celle de la dispersion de polyol étant au moins égal à 2 plus souvent est compris entre 8 et 40 et plus généralement autour de 30.

Il est très souhaitable que l'émulsion et /ou la dispersion soit aussi peu dispersée que possible.

Ainsi pour les polymères polyhydroxylés, l'indice de polydispersité (défini comme I = ($d_{90}$-$d_{10}$)/$d_{50}$) est au plus égal à 2 avantageusement égal à 1, les meilleurs résultats étant obtenus pour des valeurs de 0,2 à 0,1 voire moins.

Ainsi pour les polyisocyanates masqués ou non l'indice de polydispersité défini comme ($d_{90}$-$d_{10}$)/$d_{50}$ est au plus égal à 2 avantageusement égal à 1. Les meilleurs résultats étant obtenus pour des valeurs de 0,9 à 0,8 voire moins.

Les zones de formulation dépendent du rapport R des tailles moyennes ($d_{50}$) entre l'émulsion d'isocyanate et celles de la dispersion de polymère(s) polyhydroxylé(s), avantageusement de polyols.

R est égal à la taille moyenne de l'émulsion sur la taille moyenne de la dispersion de polymère polyhydroxylé, avantageusement de polyol.

Selon l'invention, la quantité en polymère polyhydroxylé, avantageusement en polyol, du mélange est choisie de manière à répondre à l'une des deux contraintes suivantes :

- • la teneur en polymère polyhydroxylé, avantageusement en polyol, exprimée en pourcent massique est au moins égale à 35 - 0,75R, avantageusement au moins égale à 40 - 0,75R, de préférence à 45 - 0,75R ;
- • la teneur en polymère polyhydroxylé, avantageusement en polyol, exprimée en pourcent massique est au plus égale à 45-2R, avantageusement au plus égale à 40-2R, de préférence à 35- 2R

avec R égal au rapport entre la taille moyenne ($d_{50}$) de l'émulsion et celle de la dispersion de polymère polyhydroxylé, avantageusement de polyol.

En d'autre terme R = ($d_{50}$ de l'émulsion)/($d_{50}$ de la dispersion).

Ainsi, lorsque R est compris entre 2 et 10, c'est la contrainte selon laquelle la teneur en polyol exprimée en pourcent massique est au moins égale à 35-0,75R, avantageusement au moins égale à 40-0,75R, de préférence à 45-0,75R, qui donne la zône d'existence la plus significative.

Pour R compris entre 10 et 15, il est possible de trouver des solutions viables dans l'un ou l'autre domaine défini par les inégalités ci-dessus.

Pour R supérieur à 15, on ne peut guère trouver de solutions aux problèmes posés que dans le domaine défini par la condition selon laquelle la teneur en polyol exprimée en pourcent massique est au plus égale à 45-2R, avantageusement au plus égale à 40-2R, de préférence à 35- 2R.

Ainsi dans le domaine où R est compris entre 10 et 15, deux zones d'existence stables coexistent .

Le rapport entre le nombre de fonctions hydroxyles et le nombre de fonctions isocyanates, masquées ou non, peut varier très largement comme cela a été indiqué ci-dessus.

Les rapports inférieurs à la stoechiométrie sont favorables à la plasticité, cependant que des rapports supérieurs à la stoechiométrie conduisent à des revêtements de forte dureté. Il est rare que l'on ait des rapports s'écartant du domaine allant de 0,5 à 2.

Toutefois, dans la plupart des cas et pour les utilisations les plus courantes, pour obtenir des films de vernis ou de peinture qui soient satisfaisants, il est préférable que la quantité, exprimée en équivalent, d'isocyanates bloqués réactifs soit sensiblement égale à celle des fonctions alcool libres et réactives, exprimée en équivalent, c'est-à-dire répondent à la stoechiométrie. A titre indicatif, on peut indiquer qu'il existe une tolérance de plus ou moins 20% par rapport à la stoechiométrie, mais il est préférable de n'utiliser qu'une tolérance de plus ou moins 10 ou 20%.

Les émulsions de isocyanates sont avantageusement faites selon la technique décrite dans la demande de brevet français publiée sous le n°2703358 le 07.10.94, déposée le 31.03.1993 sous le n° 93 03795 et intitulée : "Procédé de préparation d'émulsions aqueuses d'huiles et/ou de gommes et/ou de résines (poly)isocyanates avantageusement masqués et émulsions obtenues".

En ce qui concerne les éléments additionnels d'une composition selon la présente invention, il est possible qu'elle comporte en outre au moins un catalyseur de libération des isocyanates masqués, et notamment des catalyseurs, latents ou non, à base d'étain. On peut signaler que ces catalyseurs peuvent se trouver, soit au sein de la phase polyol, soit au sein de la phase isocyanate masqué, soit sous forme dispersée au sein de la phase aqueuse continue. Ils peuvent enfin être dissous dans la phase aqueuse .

Les dispersions de polyols utilisables pour l'invention sont les produits classiques utilisés dans l'industrie des peintures et vernis. Ce sont le plus souvent des (co)polymères) fabriqués en émulsion selon les procédés classiques de la polymérisation radicalaire ou en masse.

A titre d'exemples, ou plutôt de paradigmes, on peut citer les résines polyesters ou acryliques commerciales suivantes, la liste n'étant pas limitative :

- RHOPLEX® AC-1024 (confère la notice technique édité en 1984) ;
- JONCRYL® 8300 (confère la notice technique CJ8300e/B2) ;
- SANCURE® WATER BORNE URETHANE 815 (confère la notice technique révisée le 01/02/92 et imprimée le 04/01/94) ;
- SYNTHACRYL® VWS 1505( confère la notice technique éditée en septembre 1991).

Ces produits se présentent sous forme de dispersions aqueuses (ou émulsions) avec des extraits secs compris entre 20 et 60%. Les polyols sont caractérisés par leur taux de groupements hydroxyles qui sont, soient donnés par le fabricant soient dosés analytiquement.

Dans le cas des peintures, il peut être ajouté tout pigment connu en lui-même, à condition qu'il soit inerte vis-à-vis des constituants de la composition.

Quoiqu'il soit possible selon la présente invention d'utiliser les isocyanates non masqués, et comme ces derniers sont peu stables dans l'eau, les isocyanates préférés sont ceux qui sont masqués notamment par les agents de masquage en eux-mêmes connus tels que les phénols, les oximes de cétones et notamment celui de la méthyléthylcétone, les divers pyrazoles.

Les isocyanates préférés sont ceux dont l'azote d'au moins une des fonctions isocyanates est rattaché à un carbone d'hybridation sp$^3$ portant avantageusement un, et de préférence deux, atome(s) d'hydrogène. Les isocyanates dont toutes les fonctions présentent cette caractéristique (avec éventuellement ses options préférées) sont très appréciés.

On peut en particulier citer les isocyanates, masqués ou non, qui présentent un ou plusieurs cycles isocyanuriques et/ou au moins une des fonctionnalités de type biuret ou dimère.

Il est préférable que les isocyanates présentant les deux caractéristiques spécifiées ci-dessus, à savoir oligomérie et caractère aliphatique sur au moins une des fonctions isocyanates.

Avantageusement la teneur en eau desdites compositions est au moins égale à un tiers de la masse de la composition avantageusement au moins 2/5.

Les polyols préférés se présentent sous forme de dispersion aqueuse, ils ont une taille moyenne inférieure à 200 nanomètres ce qui présente une plus grande latitude de formulation en association avec les émulsions d'isocyanates. On préfère des dispersions aqueuses à faible teneur en composés solubles dans l'eau tels que les alcools et les amines qui peuvent conduire à la coalescence de l'émulsion d'isocyanates. Il est donc très souhaitable que la teneur cumulée en divers alcools et amines soit inférieure à celles qui induisent une coalescence de l'émulsion d'isocyanates.

La présente invention vise également les revêtements obtenus à partir des compositions suivant la présente invention. Ces revêtements peuvent être obtenus par réticulation, en particulier par cuisson à une température voisine de celle correspondant à la libération des isocyanates masqués éventuellement en présence d'un ou plusieurs catalyseurs. Les exemples non limitatifs suivants illustrent l'invention.

## Exemple 1

Le TOLONATE D2® est un mélange d'oligomères à cycle isocyanurique essentiellement du trimère masqué par l'oxime de la méthyléthylcétone

Le JONCRYL® 8300 est une dispersion acrylique de diamètre moyen 75 nm mesuré par diffusion quasi élastique de la lumière. L'isocyanate est une émulsion de TOLONATE® D2 de diamètre moyen égal à 1,14 μm mesuré à l'aide d'un granulomètre SYMPATEC®. Le rapport des tailles R est égal à 15,2. Le mélange contenant 36,4% en poids de JONCRYL® et 10,7% en poids de TOLONATE®, ce qui correspond à un rapport molaire [NCO]/[OH] de 1,05, est fluide et stable. Les films de 100 μm sont tirés sur plaques de verre à l'aide d'un applicateur automatique TOUZARD ET MATIGNON référence ASTM 823, méthode D. Après cuisson à 150°C durant 20 minutes, on obtient un feuil transparent de 30 μm. La dureté PERSOZ du feuil est de 208. La brillance mesurée sur une carte à contraste ERICKSEN sous un angle de 20° est de 61,4 et de 87,2 sous un angle de 60°. De plus, le feuil obtenu présente une bonne résistance aux solvants méthyléthyl cétone et à l'acétone. Le mélange JONCRYL® / TOLONATE® de 6% /1,9% qui correspond a un rapport NCO/OH de 1,05 donne lieu à une séparation de phase macroscopique et le film obtenu est hétérogène et trouble.

### Exemple 2

Le SYNTHACRYL® VSW 1505 est une dispersion de polyol de diamètre moyen 65 nm mesuré par diffusion quasi élastique de la lumière. L'isocyanate est le même que celui utilisé précédemment. Le rapport des tailles R est égal à 17,5. Le mélange contenant 28,6% en poids de SYNTHACRYL® VSW 1505 et 19,9% en poids de TOLONATE®, ce qui correspond à un rapport molaire [NCO]/[OH] de 2,62 est fluide et stable.

Les films de 100 μm sont tirés sur plaques de verre à l'aide d'un applicateur automatique TOUZARD ET MATIGNON référence ASTM 823, méthode D. Après cuisson à 150°C durant 20 minutes, on obtient un feuil qui présente une bonne résistance aux solvants méthyléthyl cétone et à l'acétone.

Le mélange SYNTHACRYL® VSW 1505 / TOLONATE® de 15% /10% qui correspond à un rapport NCO/OH de 2,52 donne lieu à une séparation de phase macroscopique entre une phase fluide et un mélange floculé.

### Exemple 3

Le RHOPLEX® AC 1024 est une dispersion de polyol de diamètre moyen 135 nm mesuré par diffusion quasi élastique de la lumière. L'isocyanate est le même que celui utilisé précédemment. Le rapport des tailles R est égal à 8,4. Le mélange contenant 15% en poids de RHOPLEX® AC 1024 et 10% en poids de TOLONATE®, ce qui correspond à un rapport molaire [NCO]/[OH] de 4,8, est fluide et stable.

Les films de 100 μm sont tirés sur plaques de verre à l'aide d'un applicateur automatique TOUZARD ET MATIGNON référence ASTM 823, méthode D. Après cuisson à 150°c durant 20 minutes, on obtient un feuil qui présente une bonne résistance aux solvants méthyléthyl cétone et à l'acétone.

Le mélange RHOPLEX® AC 1024 / TOLONATE® de 40% /10% correspond à un rapport NCO/OH de 1,8. Ce mélange donne lieu à une séparation de phase macroscopique entre une phase fluide et un mélange floculé.

### Exemple 4

Le SANCURE 815 est une dispersion de polyol de diamètre moyen 35 nm mesuré par diffusion quasi élastique de la lumière. L'isocyanate est le même que celui utilisé précédemment. Le rapport des tailles R est égal à 32,5. Le mélange contenant 20% en poids de SANCURE et 10% en poids de TOLONATE®, est fluide et stable.

Le mélange SANCURE / TOLONATE® de 8% /8% qui correspond donne lieu à une séparation de phase macroscopique entre une phase fluide et un mélange floculé.

## Revendications

1. Composition comportant

   • au moins un polyisocyanate masqué ou non sous la forme d'une émulsion aqueuse dont la taille moyenne est comprise entre 0,1 et 10 micromètres et, de préférence, inférieure à 2 et supérieure à 0,2 micromètre ;
   • au moins un polymère polyhydroxylé, avantageusement un polyol, sous la forme d'une dispersion aqueuse dont la taille moyenne est comprise entre 10 et 200 nanomètres ;

   **caractérisée par le fait que** la quantité en polymère(s) polyhydroxylé(s) du mélange est choisie de manière à répondre à l'une des deux contraintes suivantes :

   ☐ la teneur en polymère(s) polyhydroxylé(s) exprimée en pour cent massique est au moins égale à 35 - 0,75 R, avantageusement au moins égale à 40 - 0,75 R, de préférence à 45 - 0,75 R ;
   ☐ la teneur en polymère(s) polyhydroxylé(s) exprimée en pour cent massique est au plus égale à 45 - 2 R, avantageusement au plus égale à 40 - 2 R, de préférence à 35 - 2 R ;

   avec R égal au rapport entre la taille moyenne ($d_{50}$) de l'émulsion et celle de la dispersion de polymère polyhydroxylé, avantageusement de polyol, et avec la condition que R soit au moins égal à 2.

2. Composition selon la revendication 1, **caractérisée par le fait que** le(s)dit(s) polyisocyanate(s), masqué(s) ou non, présente(nt) un indice de polydispersité, défini comme ($d_{90}$-$d_{10}$)/$d_{50}$, au plus égal à 2, avantageusement égal à 1.

3. Composition selon les revendications 1 et 2, **caractérisée par le fait que** le(s)dit(s) polymère(s) polyhydroxylé(s) présente(nt) un indice de polydispersité, défini comme I = ($d_{90}$-$d_{10}$)/$d_{50}$, au plus égal à 2, avantageusement égal à 1.

4. Composition selon les revendications 1 à 3, **caractérisée par le fait qu'**elle comporte, en outre, au moins un catalyseur de libération des isocyanates masqués et, notamment, des catalyseurs, latents ou non, à base d'étain.

5. Composition selon les revendications 1 à 4, **caractérisée par le fait que** la teneur en eau de ladite composition est au moins égale à un tiers de la masse de la composition, avantageusement au moins à 2/5.

**6.** Composition selon les revendications 1 à 5, **caractérisée par le fait que** le(s)dit(s) polyisocyanate(s) présente(nt) un ou plusieurs cycles isocyanuriques et/ou au moins une des fonctionnalités de type biuret ou dimère.

**7.** Composition selon les revendications 1 à 6, **caractérisée par le fait que** ledit polyisocyanate est choisi parmi ceux dont l'azote d'au moins une des fonctions isocyantes est rattaché à un carbone d'hybridation sp$^3$ portant avantageusement un et, de préférence deux, atome(s) d'hydrogène.

**8.** Composition selon les revendications 1 à 7, **caractérisée par le fait que** ledit polyisocyanate est choisi parmi ceux qui sont masqués notamment par les agents de masquage en eux-mêmes connus tels que les phénols, les oximes de cétones et notamment celui de la méthyléthylcétone, les divers pyrazoles.

**9.** Revêtement **caractérisé par le fait qu'**il est susceptible d'être obtenu par réticulation à partir des compositions selon les revendications 1 à 8.

**Patentansprüche**

**1.** Zusammensetzung, die umfasst:

- wenigstens ein maskiertes oder nicht maskiertes Polyisocyanat in Form einer wässrigen Emulsion, deren mittlere Größe zwischen 0,1 und 10 Mikrometer liegt und vorzugsweise kleiner als 2 und größer als 0,2 Mikrometer ist;
- wenigstens ein Polyhydroxypolymer, vorteilhafterweise ein Polyol, in Form einer wässrigen Dispersion, deren mittlere Größe zwischen 10 und 200 Nanometer liegt;

**dadurch gekennzeichnet, dass** die Menge an Polyhydroxypolymer(en) des Gemischs so gewählt wird, dass sie einer der beiden folgenden Einschränkungen entspricht

☐ der Gehalt an Polyhydroxypolymer(en), ausgedrückt in Masseprozent, ist wenigstens gleich 35 - 0,75 R, vorteilhafterweise wenigstens gleich 40 - 0,75 R, vorzugsweise 45 - 0,75 R;

☐ der Gehalt an Polyhydroxypolymer(en), ausgedrückt in Masseprozent, ist höchstens gleich 45 - 2 R, vorteilhafterweise höchstens gleich 40 - 2 R, vorzugsweise 35 - 2 R;

mit R gleich dem Verhältnis zwischen der mittleren Größe ($d_{50}$) der Emulsion und derjenigen der Dispersion von Polyhydroxypolymer, vorteilhafterweise von Polyol, und mit der Bedingung, dass R wenigstens gleich 2 ist.

**2.** Zusammensetzung gemäß Anspruch 1, **dadurch gekennzeichnet, dass** besagtes(besagte) Polyisocyanat(e), das(die) maskiert oder nicht maskiert ist(sind), einen Polydispersitätsindex, der definiert ist als $(d_{90} - d_{10})/d_{50}$, von höchstens gleich 2, vorteilhafterweise gleich 1, aufweist(aufweisen).

**3.** Zusammensetzung gemäß den Ansprüchen 1 und 2, **dadurch gekennzeichnet, dass** besagtes(besagte) Polyhydroxypolymer(e) einen Polydispersitätsindex, der definiert ist als $I = (d_{90} - d_{10})/d_{50}$, von höchstens gleich 2, vorteilhafterweise gleich 1 aufweist(aufweisen).

**4.** Zusammensetzung gemäß den Ansprüchen 1 bis 3, **dadurch gekennzeichnet, dass** sie außerdem wenigstens einen Katalysator zur Freisetzung der maskierten Isocyanate und insbesondere latente oder nicht latente Katalysatoren auf der Basis von Zinn umfasst.

**5.** Zusammensetzung gemäß den Ansprüchen 1 bis 4, **dadurch gekennzeichnet, dass** der Wassergehalt besagter Zusammensetzung wenigstens gleich einem Drittel der Masse der Zusammensetzung, vorteilhafterweise wenigstens 2/5 ist.

**6.** Zusammensetzung gemäß den Ansprüchen 1 bis 5, **dadurch gekennzeichnet, dass** besagtes(besagte) Polyisocyanat(e) einen oder mehrere Isocyanurringe und/oder wenigstens eine der funktionellen Gruppen vom Biurettyp oder vom dimeren Typ aufweist(aufweisen).

**7.** Zusammensetzung gemäß den Ansprüchen 1 bis 6, **dadurch gekennzeichnet, dass** besagtes Polyisocyanat unter denjenigen ausgewählt ist, bei denen der Stickstoff von wenigstens einer der Isocyanatfunktionen an ein sp$^3$-hybridisiertes Kohlenstoffatom, das vorteilhafterweise ein und vorzugsweise zwei Wasserstoffatom(e) trägt, gebunden ist.

**8.** Zusammensetzung gemäß den Ansprüchen 1 bis 7, **dadurch gekennzeichnet, dass** besagtes Polyisocyanat unter denjenigen ausgewählt ist, die insbesondere durch die an sich bekannten Maskierungsmittel, wie die Phenole, die Oxime von Ketonen und insbesondere dasjenige von Methylethylketon, die verschiedenen Pyrazole, maskiert sind.

**9.** Beschichtung, **dadurch gekennzeichnet, dass** sie aus den Zusammensetzungen gemäß den Ansprüchen 1 bis 8 durch Vernetzung erhalten werden kann.

## Claims

1. Composition comprising:

   - at least one masked or unmasked polyisocyanate in the form of an aqueous emulsion whose mean size is between 0.1 and 10 micrometres and preferably smaller than 2 and larger than 0.2 micrometres;
   - at least one polyhydroxylated polymer, advantageously a polyol, in the form of an aqueous dispersion whose mean size is between 10 and 200 nanometres;

   **characterized in that** the quantity of polyhydroxylated polymer(s) in the mixture is chosen so as to meet either of the following two constraints:

   - ☐ the content of polyhydroxylated polymer(s) expressed in mass per cent, is at least equal to 35 - 0.75R, advantageously at least equal to 40 - 0.75R, preferably to 45 - 0.75R;
   - ☐ the content of polyhydroxylated polymer(s), expressed in mass per cent, is at most equal to 45 - 2R, advantageously at most equal to 40 - 2R, preferably to 35 - 2R;

   with R equal to the ratio of the mean size ($d_{50}$) of the emulsion to that of the dispersion of polyhydroxylated polymer, advantageously of polyol, and with the condition that R is at least equal to 2.

2. Composition according to Claim 1, **characterized in that** the said polyisocyanate(s), masked or otherwise, has(have) a polydispersity index, defined as ($d_{90}$-$d_{10}$)/$d_{50}$, at most equal to 2, advantageously equal to 1.

3. Composition according to Claims 1 and 2, **characterized in that** the said polyhydroxylated polymer(s) has(have) a polydispersity index, defined as I = ($d_{90}$-$d_{10}$)/$d_{50}$, at most equal to 2, advantageously equal to 1.

4. Composition according to Claims 1 to 3, **characterized in that** it additionally comprises at least one catalyst of release of the masked isocyanates, and especially tin-based catalysts, latent or otherwise.

5. Composition according to Claims 1 to 4, **characterized in that** the water content of the said composition is at least equal to one third of the mass of the composition, advantageously to at least 2/5.

6. Composition according to Claims 1 to 5, **characterized in that** the said polyisocyanate(s) has(have) one or more isocyanuric rings and/or at least one of the functionalities of the biuret or dimer type.

7. Composition according to Claims 1 to 6, **characterized in that** the said polyisocyanate is chosen from those in which the nitrogen of at least one of the isocyanate functional groups is attached to a carbon with $sp^3$ hybridization advantageously carrying one, and preferably two, hydrogen atom(s).

8. Composition according to Claims 1 to 7, **characterized in that** the said polyisocyanate is chosen from those which are masked especially by masking agents which are themselves known, such as phenols, ketone oximes and especially methyl ethyl ketone oxime, and the various pyrazoles.

9. Coating **characterized in that** it is capable of being obtained by crosslinking from the compositions according to Claims 1 to 8.